# EUROPÄISCHE PATENTANMELDUNG

(11) **EP 1 103 754 A1**
(43) Veröffentlichungstag der Anmeldung: **30.05.2001**
(21) Anmeldenummer: 00125096.8
(22) Anmeldetag: 17.11.2000
(51) Int. Cl.: F16L 59/10

(54) **Tiefgezogenes Formteil**

(30) Priorität: 25.11.1999 DE 29920682 U
(71) Anmelder: KLÖCKNER Pentaplast GmbH, 56410 Montabaur (DE)
(72) Erfinder: Jetz, Stefan, 84556 Kastl (DE)
(74) Vertreter: Zounek, Nikolai, Dipl.-Ing.

(57) **Zusammenfassung**

Ein tiefgezogenes Formteil zur Ummantelung von geraden Rohrteilen, Rohrbögen, Rohrabzweigungen, Armaturen oder sonstigen nicht-rohrförmigen Leitungselementen, die mit Isoliermaterial umhüllt sind, weist ein Gitter aus Längs- und Querstegen 3, 4 auf seiner Außenseite auf, geformt durch das Tiefziehen des Formteils. Dabei ist die Außenseite des Formteils mit Metallpartikeln pigmentiert, bedampft oder mit einer Folie kaschiert, durch die sich das Gitter ähnlich dem Gitternetz einer glasfaserverstärkten Metallfolie hindurch abzeichnet.

## Beschreibung

Die Erfindung betrifft ein tiefgezogenes Formteil zur Ummantelung von geraden Rohrteilen, Rohrbögen, Rohrabzweigungen, Armaturen oder sonstigen nicht-rohrförmigen Leitungselementen, die mit Isoliermaterial umhüllt sind.

Zum Schutz von gegen Wärmeverlust isolierten Rohrleitungen, zugehörigen Leitungselementen und Armaturen in Gebäuden gegen mechanische Beschädigung, Verschmutzung und als optisch ansprechender Oberflächenabschluß sind PVC-Hartfolien bekannt, die im allgemeinen eine hellgraue Farbe haben. Diese PVC-Hartfolien sind resistent gegen die meisten Säuren und Laugen und wasserabweisend. Für die Anwendung auf geraden Rohrteilen werden die Folien als Rollenware eingesetzt, die infolge ihrer Rollenneigung zylindrische Form annehmen. Für 45 ° und 90° Rohrbögen gelangen entsprechende PVC-Rohrbogen zum Einsatz. Des weiteren sind im Stand der Technik auch entsprechende Ummantelungen durch PVC-Formteile für Rohrabzweigungen und sonstige gekrümmte Formen wie Winkel- und Gewindebogen, handgebogene Formen sowie für Quetsch- und Kupplungsverbindungen bekannt. Im übrigen ist es bekannt, Flansche, Reglerelemente und Ventile durch PVC-Formteile zu umkleiden.

Zum Schutz isolierter Rohrleitungen in Gebäuden werden auch gekörnte strukturierte Aluminumfolien eingesetzt, vor allem bei höheren Temperaturbedingungen als solche, für die PVC-Folien noch zulässig sind.

Für die Wärmedämmung von Wärmeverteilungs- und Brauchwasseranlagen, von Klima- und Lüftungsleitungen in der Haustechnik sowie von Rohrleitungen in industriellen Anlagen sind Dämmstoffschalen aus Mineralwolle bekannt. Hierzu zählen u. a. Schalen aus konzentrisch gewickelter Glaswolle oder Steinwolle, die mit einer gitternetzverstärkten reißfesten Aluminiumfolie mit oder ohne selbstklebende Überlappung, aber auch ohne Überlappung kaschiert sind. Diese Dämmstoffschalen sind einseitig aufgeschlitzt und können auf der Innenwandung zur Erleichterung der Montage eingesägt sein. Neben den gewickelten Mineralwolleschalen gibt es auch solche, die aus Mineralwolleblöcken herausgeschnitten sind. Weiter sind sogenannten Lamellenmatten bekannt, die aus einseitig auf glasgitterverstärkte Aluminiumfolie geklebten Mineralwollestreifen bestehen und zu gleichen Zwecken eingesetzt werden.

Üblicherweise werden Mineralwolle-Rohrschalen zur Anpassung an von der geraden Rohrform abweichenden Rohrgeometrien bzw. Armaturen durch sogenannte Gehrungsschnitte an die jeweilige Geometrie angepaßt. Durch die Gehrungsschnitte wird abschnittsweise Material aus der Rohrschale herausgeschnitten, wobei auch die Kaschierung durchtrennt wird. Dabei stellt es sich als problematisch heraus, daß der manuelle Gehrungsschnitt auf einer Baustelle nicht vollkommen exakt ist, da eine sogenannten Gehrungslade zum sicheren und genauen Zuschneiden von T-Stücken, Winkeln und Bögen oft nicht zur Verfügung steht oder nicht verwendet wird, um die Zuschneidearbeiten zu beschleunigen. Bei Bögen kann durch Gehrungsschnitte kein runder Rücken, d.h. kein durchgehend glatter Rundbogen erzielt werden sondern nur ein aus Sektionsbögen zusammengesetzter Bogen. Nach der Montage der eingeschnittenen Rohrschalen auf der Rohrleitung bzw. der Armatur werden die Gehrungsschnitte dann üblicherweise mit Aluminiumklebeband, das optisch auf die Rohrschalenkaschierung abgestimmt ist, abgeklebt. Das Umwickeln einer eckigen Geometrie und das Abkleben der Schnittkanten mit einem mehrere Zentimeter breiten Klebeband ergibt häufig ein sehr faltiges, schlechtes optisches Aussehen. Das Ausstopfen mit loser Mineralwolle, um das faltige Aussehen zu glätten, ist kaum möglich. Um dem abzuhelfen, wäre es denkbar, die Bögen oder sonstigen Geometrien der Rohrverbindungen mit Formteilen zu ummanteln, die als Oberseite ebenfalls eine glasfaserverstärkte Aluminiumfolie aufweisen, um eine Abstimmung mit den geraden Rohrleitungsteilen zu erzielen, die gleichfalls mit einer glasfaserverstärkten Aluminiumfolie kaschiert sind. Eine derartige Ummantelung wäre aufwendig und dementsprechend teuer.

Aufgabe der Erfindung ist es, ein tiefgezogenes Formteil zu schaffen, das dämmstoffisolierte Rohrteile wie Rohrbögen, Rohrabzweigungen, Armaturen und dergleichen ummantelt und dessen Oberfläche das Aussehen einer glasgitterverstärkten, netzartigen Oberfläche aufweist.

Zur Lösung dieser Aufgabe weist das Formteil ein Gitter aus Längs- und Querstegen auf seiner Außenseite auf, geformt durch das Tiefziehen des Formteils.

In Ausgestaltung der Erfindung ist die Außenseite des Formteils mit Metallpartikeln pigmentiert, bedampft oder mit einer Folie kaschiert, durch die sich das Gitter ähnlich dem Gitternetz einer glasfaserverstärkten Metallfolie hindurch abzeichnet.

Zweckmäßigerweise besteht das Formteil aus PVC-Hartfolie, PVC-Platte oder einem sonstigen tiefziehbaren Kunststoff und besitzt eine Dicke von 0,1 bis 2,00 mm. In Ausgestaltung der Erfindung weist die Folie eine Dicke von 25 bis 80 um auf. Ist das Formteil bogenförmig, so sind zweckmäßigerweise die Längsstege in Längsrichtung des Formteils zueinander parallel ausgerichtet und haben gleiche Abstände voneinander. Dabei besitzen die Längsstege einen Bogen entsprechend der Bogenkrümmung des Formteils.

In weiterer Ausgestaltung der Erfindung laufen die Querstege eines bogenförmigen Formteils im Bogenkrümmungsbereich mit ihren Ende jeweils zusammen und in der Mitte ihrer Gesamtlänge sind sie am weitesten voneinander entfernt. Außerhalb des Bogenkrümmungsbereichs verlaufen die Querstege parallel zueinander.

Ganz allgemein gilt für die Erfindung, daß der Verlauf der Längs- und Querstege auf der Außenseite des Formteils der jeweiligen Geometrie des Formteils so angepaßt ist, daß sich nach dem Aufkaschieren der glatten Folie oder dem Bedampfen oder Pigmentieren der Außenseite mit Metallpartikeln und der Formgebung des Formteils eine Oberflächenoptik entsprechend derjenigen einer glasfaserverstärkten, gittemetzartigen Metallfolie ergibt.

Die Erfindung wird im folgenden anhand der Zeichnung näher beschrieben. Es zeigen:
- Fig. 1: perspektivisch ein Formteil aus Rollenware für die Ummantelung von geraden Rohrstücken,
- Fig. 2: einen Schnitt entlang der Linie 1-1 des Formteils der Fig. 1, mit auf der Außenseite aufgebrachter Grundfolie, die mit einer aluminiumbedampften Folie kaschiert ist,
- Fig. 3: perspektivisch ein Formteil für die Ummantelung eines 90°-Rohrbogens nach dem Tiefziehvorgang,
- Fig. 4: eine Draufsicht auf das Formteil nach Fig. 3,
- Fig. 5: eine Seitenansicht des zu einer Rohrbogenummantelung zusammengefügten Formteils gemäß den Fig. 3 und 4, und
- Fig.en 6a u. 6b: weitere Formteile für die Ummantelung einer Rohrabzweigung und eines Ventils.

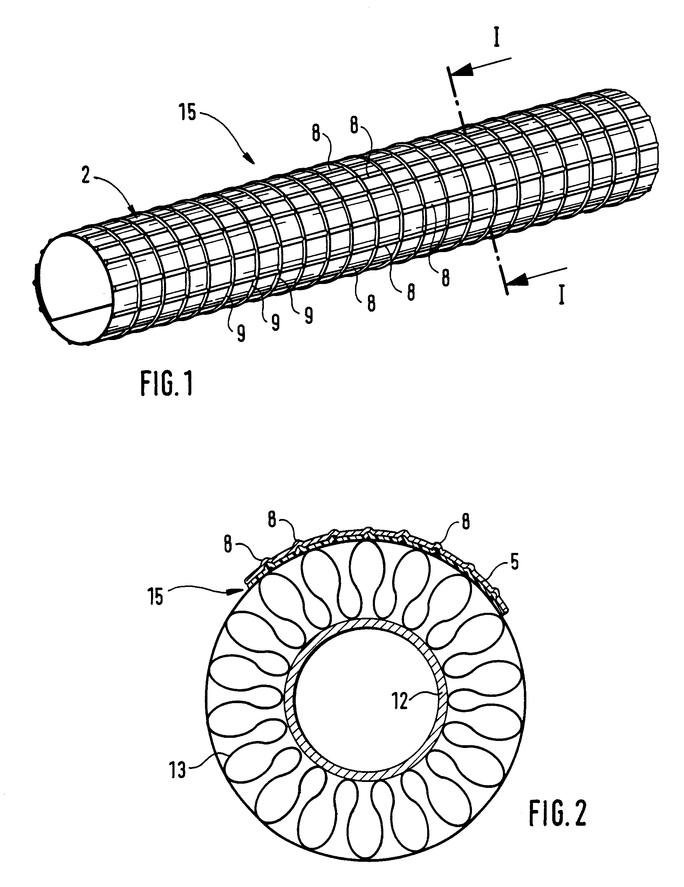

In Fig. 1 ist perspektivisch ein Formteil 15 aus beispielsweise PVC gezeigt, bei dem es sich um eine Rohrschale handelt, mit der isolierte gerade Rohrteile ummantelt werden. Auf der Außenseite des Formteils 15 verlaufen Längsstege 8 und Querstege 9, die zusammen ein netzartiges Gitter 2 bilden. Die Stege 8, 9 ebenso wie die Stege 3, 4 sowie 10,11 der in den anschließenden Figuren dargestellten Formteile besitzen im allgemeinen eine Dicke im Bereich von 0,05 bis 1,00 mm und eine Höhe von 0,015 bis 1,0 mm. Die Ausbildung der Stege auf den Außenseiten der Formteile wird durch entsprechende Ausbildung der Tiefziehformen für die Formteile erhalten.

Das Formteil 15 wird beispielsweise in der Weise hergestellt, daß über eine erhabene Tiefziehform, die auf ihrer Außenseite mit einem netzartigen Gitter aus Quer- und Längsstegen ausgerüstet ist, eine ebene erwärmte Tiefziehfolie angelegt, mittels Unterdruck an die Tiefziehform angesaugt und zu dem Formteil 15 ausgeformt wird. Dabei drückt sich das Gitter der Tiefziehform durch die Tiefziehfolie hindurch ab und erscheint an deren Außenseite als das voranstehend beschriebene Gitter 2. Die Tiefziehfolie kann z.B. mit Metallpartikeln, insbesondere Aluminiumpartikeln pigmentiert, bedampft oder mit einer Folie 5 kaschiert sein, die ein metallähnliches, insbesondere aluminiumähnliches Aussehen besitzt.

Wie aus Fig. 2 ersichtlich ist, wird ein Rohr 12, das dämmstoffisoliert ist, mit einer Mineralwolle-Isolation 13 umgeben und anschließend durch das Formteil 15 ummantelt, das beispielsweise überlappend verklebt oder vernietet wird. Das Gitter aus den Längs- und Querstegen der Tiefziehform zeichnet sich durch die Tiefziehfolie hindurch ab, so daß sich auf der Außenseite des Formteils 15 das Gitter 2 ähnlich der Struktur einer glasfaserverstärkten, gitternetzartigen Metallfolie abzeichnet. Die Folie 5 ist eine Metall bedampfte, im allgemeinen mit Aluminium bedampfte Folie, die eine Dicke von 25 bis 100 µm aufweist. Bei der Tiefziehfolie handelt es sich bevorzugt um eine PVC-Hartfolie mit einer Dicke von 0,1 bis 1,00 mm oder um eine PVC-Platte mit einer Dicke 1 bis zu 2 mm. Anstelle von PVC-Hartfolie können auch Hartfolien aus anderen Kunststoffen, die leicht tiefgezogen werden können, verwendet werden.

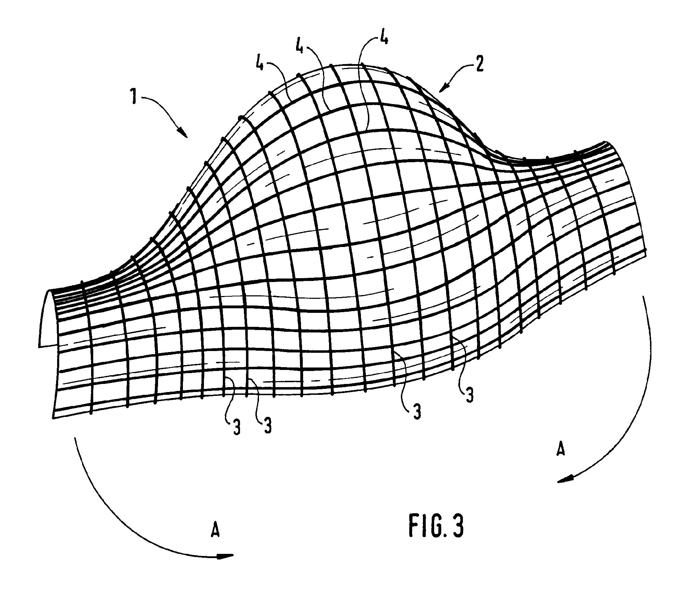

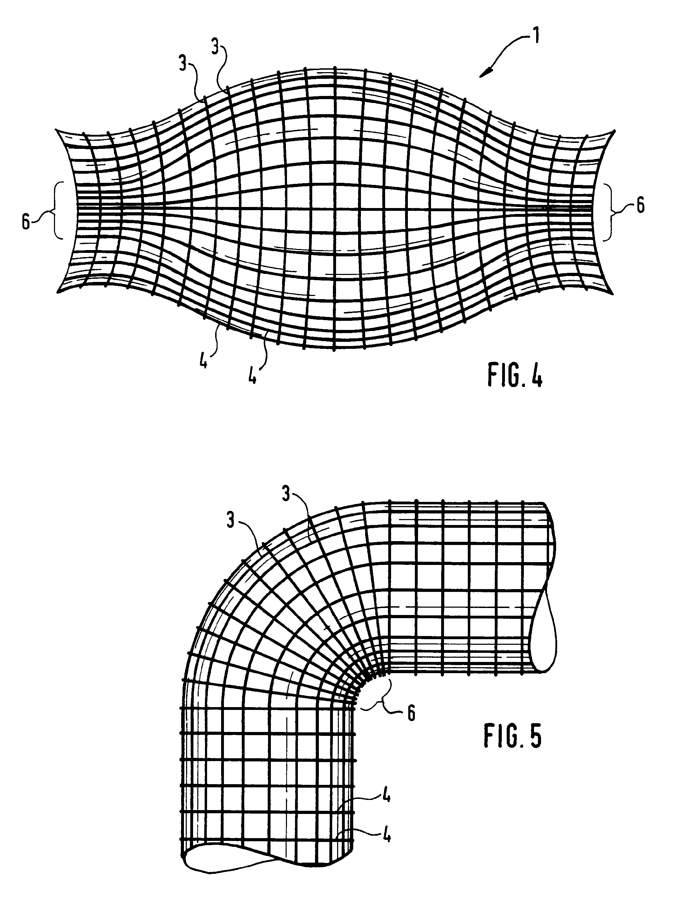

In Fig. 3 ist perspektivisch ein tiefgezogenes Formteil 1 gezeigt, aus dem die Ummantelung eines Rohrbogens gebildet wird, wie nachstehend noch näher erläutert werden wird. Das Formteil 1 besitzt Längsstege 3 in Längsrichtung, die parallel zueinander laufen und gleiche Abstände voneinander aufweisen. Die Längsstege 3 besitzen, entsprechend der Bogenkrümmung des Formteils 1, einen bogenförmigen Verlauf, wie aus Fig. 5 ersichtlich ist. In der Draufsicht nach Fig. 4 auf das Formteil 1 zeigt sich, daß die Querstege 4 in einem Bogenkrümmungsbereich 6 mit ihren Enden jeweils zusammenlaufen. In der Mitte ihrer Gesamtlänge sind die Querstege 4 am weitesten voneinander entfernt. Außerhalb des Bogenkrümmungsbereichs 6 verlaufen die Querstege 4 parallel zueinander.

Das Formteil 1 wird zum Ummanteln eines Rohrbogens mit seinen Enden, wie in Fig. 3 angezeigt, in Richtung der Pfeile A, A zusammengebogen und nimmt dann die in Fig. 5 in Seitenansicht dargestellte Form an. Bei dieser Form handelt es sich um eine Ummantelung für einen 90°-Rohrbogen einer Rohrleitung. Aus Fig. 5 ist ersichtlich, daß die Längsstege 3 einen 90°-Bogen besitzen und außerhalb des Rohrbogens parallel zueinander in Längsrichtung der jeweiligen, nicht dargestellten Rohre ausgerichtet sind, die üblicherweise an den Rohrbogen anschließen. Die Querstege 4 verlaufen außerhalb des Rundbogens parallel zueinander, während sie im Bogenkrümmungsbereich 6 zusammenlaufen.

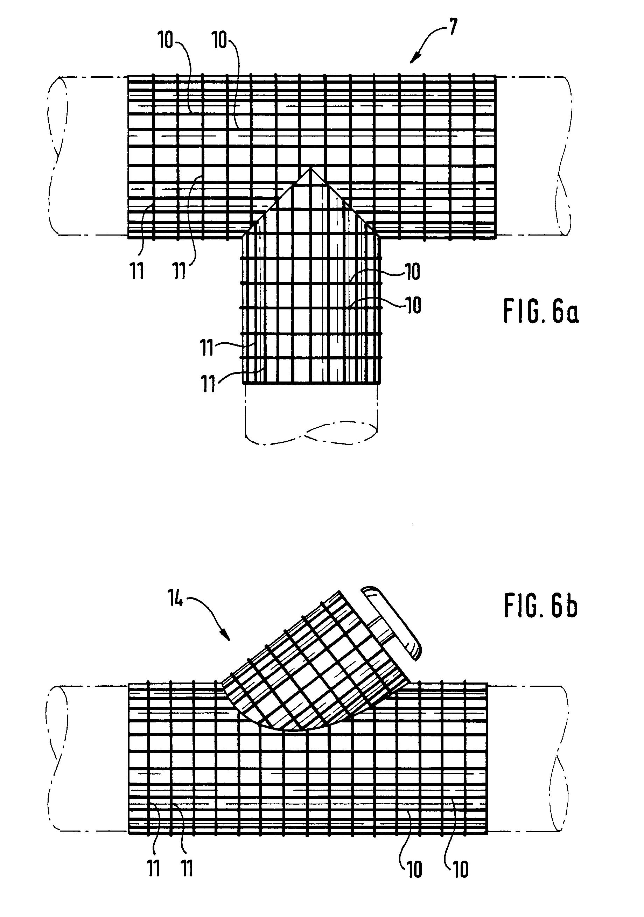

In Fig. 6a ist eine weitere Ausführungsform eines Formteils 7 gezeigt, bei dem es sich beispielsweise um eine Rohrabzweigung handelt. Das Formteil 7 besitzt Längsstege 10 und Querstege 11.

Fig. 6b zeigt eine Ventilkappe 14 mit Längsstegen 10 und Querstegen 11.

Es gilt ganz allgemein für die Formteile, daß der Verlauf der Längs- und Querstege 3, 4; 8, 9 bzw. 10, 11 auf der Außenseite des jeweiligen Formteils 1; 6,7 bzw. 14 und 15 der Geometrie des Formteils so angepaßt ist, daß nachdem das Formteil in seinen Gebrauchszustand gebracht wurde das Formteil eine Oberflächenoptik besitzt, die derjenigen einer glasgitterverstärkten, netzartigen Aluminiumfolie entspricht.

Bei den voranstehend beschriebenen Ausführungsformen ist eine Folie auf das Formteil schon vor dem Einbau des Formteils in eine Rohrleitung aufkaschiert. Gemäß der Erfindung ist es auch möglich, das Formteil mit der gittemetzartig ausgebildeten Oberseite durch Tiefziehen herzustellen, ohne jedoch eine Folie mit Metalloptik, insbesondere Al-Optik vorweg aufzukaschieren. Ein derartiges Formteil erhält eine Metalloptik bzw. Al-Optik erst nach erfolgtem Einbau in die Rohrleitung, indem das Formteil bei der Montage mit einem Metall- bzw-Aluminium-Klebeband umwickelt wird. Derartige Aluminium-Klebebänderwerden üblicherweise beim Einsatz von alukaschierten Mineralwolleschalen ohnehin verwendet. Das umgewickelte Aluminium-Klebeband wird bei der Montage beispielsweise mit einer Bürste an die Gitternetzstruktur der Oberfläche des Formteils angedrückt und in die Struktur durch Bürsten eingedrückt.

Das Formteil ist im allgemeinen einstückig, kann jedoch auch aus mehreren Teilen zusammengesetzt sein, die beispielsweise zusammengesteckt oder miteinander verschweißt sind. So kann beispielsweise ein einstückiger Bogen nach seiner Montage entlang seines Rückens durch eine Schweißnaht geschlossen werden.

## Patentansprüche

1. Tiefgezogenes Formteil zur Ummantelung von geraden Rohrteilen, Rohrbögen, Rohrabzweigungen, Armaturen oder sonstigen nicht-rohrförmigen Leitungselementen, die mit Isoliermaterial umhüllt sind, dadurch gekennzeichnet, daß das Formteil (1; 7; 14; 15) ein Gitter (2) aus Längs- und Querstegen (3, 4; 8, 9; 10, 11) auf seiner Außenseite aufweist, geformt durch das Tiefziehen des Formteils.

2. Tiefgezogenes Formteil nach Anspruch 1, dadurch gekennzeichnet, daß die Außenseite des Formteils (1; 7; 14; 15) mit Metallpartikeln pigmentiert, bedampft oder mit einer Folie (5) kaschiert ist, durch die sich das Gitter (2) ähnlich dem Gitternetz einer glasfaserverstärkten Metallfolie hindurch abzeichnet.

3. Tiefgezogenes Formteil nach Anspruch 2, dadurch gekennzeichnet, daß die Folie (5) eine aluminiumbedampfte Folie oder eine Folie mit dem Aussehen einer Aluminiumfolie ist.

4. Tiefgezogenes Formteil nach Anspruch 1, dadurch gekennzeichnet, daß es aus PVC-Hartfolie, PVC-Platte oder einem sonstigen tiefziehbaren Kunststoff besteht und eine Dicke von 0,1 bis 2,00 mm besitzt.

5. Tiefgezogenes Formteil nach Anspruch 2, dadurch gekennzeichnet, daß die Folie (5) eine Dicke von 25 bis 100 µm aufweist.

6. Tiefgezogenes Formteil nach Anspruch 1, dadurch gekennzeichnet, daß bei einem bogenförmigen Formteil die Längsstege (3) in Längsrichtung des tiefgezogenen Formteils (1) zueinander parallel ausgerichtet sind und gleiche Abstände voneinander haben.

7. Tiefgezogenes Formteil nach Anspruch 6, daß die Längsstege (3) einen Bogen besitzen, entsprechend der Bogenkrümmung des Formteils (1).

8. Tiefgezogenes Formteil nach Anspruch 1, dadurch gekennzeichnet, daß die Querstege (4) eines bogenförmigen Formteils (1) im Bogenkrümmungsbereich (6) mit ihren Enden jeweils zusammenlaufen und in der Mitte ihrer Gesamtlänge am weitesten voneinander entfernt sind.

9. Tiefgezogenes Formteil nach Anspruch 8, dadurch gekennzeichnet, daß außerhalb des Bogenkrümmungsbereichs (6) die Querstege (4) parallel zueinander verlaufen.

10. Tiefgezogenes Formteil nach einem oder mehreren der Ansprüche 1 bis 9, dadurch gekennzeichnet, daß der Verlauf der Längs- und Querstege (3, 4; 8, 9; 10, 11) auf der Außenseite eines Formteils (1; 7; 14; 15) der jeweiligen Geometrie des Formteils so angepaßt ist, daß sich nach dem Aufkaschieren der glatten Folie (5) und der Formgebung des Formteils eine Oberflächenoptik entsprechend derjenigen einer glasgitterverstärkten netzartigen Metallfolie ergibt.

11. Tiefgezogenes Formteil nach Anspruch 1, dadurch gekennzeichnet, daß die Längs- und Querstege (3, 4; 8, 9; 10, 11) eine Dicke im Bereich von 0,05 bis 1,0 mm und eine Höhe von 0,015 bis 1,0 mm aufweisen.

12. Tiefgezogenes Formteil nach einem oder mehreren der Ansprüche 1 bis 11, dadurch gekennzeichnet, daß es aus zwei oder mehreren Teilen zusammengesetzt ist, die zusammengesteckt oder miteinander verschweißt sind.

13. Tiefgezogenes Formteil nach Anspruch 1, dadurch gekennzeichnet, daß es nach der Montage in einer Rohrleitung mit einem Metall- bzw. Aluminium-Klebeband umwickelt ist, das in die Gittemetzstruktur des Formteils eingedrückt ist.
